# EUROPÄISCHE PATENTSCHRIFT

(11) **EP 4 771 604 B1**
(45) Veröffentlichungstag und Bekanntmachung des Hinweises auf die Patenterteilung: **25.11.2026**
(21) Anmeldenummer: 25780240.5
(22) Anmeldetag: 19.09.2025
(51) Int. Cl.: G08B 21/20, G01N 21/81, G01N 31/22

(54) **VORRICHTUNG ZUR ERKENNUNG VON FEUCHTIGKEIT UND DEREN VERWENDUNG**
DEVICE FOR DETECTING MOISTURE AND USE OF SAID DEVICE
DISPOSITIF DE DÉTECTION D'HUMIDITÉ ET UTILISATION DUDIT DISPOSITIF

(30) Priorität: 25.09.2024 AT 507852024
(43) Veröffentlichungstag der Anmeldung: 08.07.2026
(73) Patentinhaber: Kirbas, Josef, 5020 Salzburg (AT)
(72) Erfinder: Kirbas, Josef, 5020 Salzburg (AT)
(74) Vertreter: KLIMENT & HENHAPEL
(86) Internationale Anmeldenummer: PCT/EP2025/076794
(87) Internationale Veröffentlichungsnummer: WO 2026/068351

(56) Entgegenhaltungen:
- US-A- 3 019 638
- US-A1- 2019 094 097
- US-A1- 2021 164 213

## Beschreibung

### GEBIET DER ERFINDUNG

Die vorliegende Erfindung betrifft eine Vorrichtung zur Erkennung von Feuchtigkeit, umfassend zumindest eine Schnur aus einem saugfähigen Material, um die Ausbreitung von Feuchtigkeit entlang der jeweiligen Schnur zu ermöglichen, die Vorrichtung weiters umfassend ein Gehäuse aus einem feuchtigkeitsdichten Material, in welches Gehäuse die zumindest eine Schnur mit einem Endabschnitt mündet, um eine Ausbreitung der Feuchtigkeit entlang der jeweiligen Schnur bis ins Gehäuse zu ermöglichen, wobei das Gehäuse ein Sichtfenster aufweist, durch das zumindest ein im Gehäuse angeordneter Kontrollinnenraum von außen zumindest abschnittsweise einsehbar ist, wobei der zumindest eine Kontrollinnenraum dazu eingerichtet ist, ein Ansammeln von Flüssigkeit zu ermöglichen und/oder zur Anordnung von zumindest einem Feuchtigkeitsanzeigeelement.

Weiters betrifft die vorliegende Erfindung die Verwendung der erfindungsgemäßen Vorrichtung.

### STAND DER TECHNIK

In vielen Bereichen - wie z.B. im Sanitärbereich, in Küchen, bei Aquarien oder Schwimmbecken - sind Fugen gegeben, die dauerhaft gegen Feuchtigkeit bzw. Nässe abgedichtet werden müssen, typischerweise mit Silikon, was manchmal auch als Silikonnaht bezeichnet wird. Auftretende Undichtigkeiten können erhebliche Schäden verursachen, insbesondere wenn sie lange unentdeckt bleiben, wobei insbesondere Haarrisse für den Laien kaum erkennbar sind. Ähnliche Probleme treten in der Praxis auch bei Wartungsfugen auf, die nicht rechtzeitig erneuert werden.

Zur Vermeidung solcher Schäden ist es aus der DE 10201104756 A1 bekannt, einen Drainageschlauch in Silikonnähte bei Aquarien oder im Sanitärbereich anzuordnen, wobei durch die jeweilige undichte Silikonnaht durchtretende Flüssigkeit bzw. durchtretendes Wasser durch den Drainageschlauch abfließen kann, beispielsweise in einen Sammelbehälter. Nachteilig an dieser Lösung ist, dass ein Erkennen der Undichtigkeit bereits in einem frühzeitigen Stadium, wo zunächst nur sehr wenig Flüssigkeit austritt, tatsächlich nicht zuverlässig möglich ist, da diese geringe Flüssigkeitsmenge nur bei einem großen, in der Praxis kaum realisierbaren Gefälle des Drainageschlauchs hinreichend effektiv weitergeleitet wird und daher typischerweise bereits relativ große Mengen an Wasser bzw. Flüssigkeit in den Drainageschlauch eingetreten sein müssen, ehe es zu einem merkbaren Effekt bzw. Abfluss kommt.

Aus der EP 4257758 A1 und DE202020002332 U1 ist die Verwendung von im weitesten Sinne elektronischer Sensoren zur Detektion von Feuchtigkeit bekannt, wobei zur Warnung eine optische Anzeige, die z.B. LEDs umfassen kann, vorgesehen sein kann. Nachteilig an diesen Lösungen ist, dass der Aufbau relativ aufwendig ist und für das Funktionieren elektrische Energie benötigt wird. Oxidierende Metallteile bzw. Kupferleitungen können zudem in Hinblick auf die Umweltverträglichkeit problematisch werden.

Die US 2021 164 213 A1 zeigt eine Vorrichtung zur Erkennung von Feuchtigkeit im Zusammenhang mit einer Toilettenschüssel, umfassend zumindest eine Schnur aus einem saugfähigen Material und ein Gehäuse mit Sichtfenster.

Die US 3 019 638 A zeigt eine Vorrichtung zur Erkennung von Feuchtigkeit im Zusammenhang mit einem Pflanzentopf, ebenfalls umfassend zumindest eine Schnur aus einem saugfähigen Material.

### AUFGABE DER ERFINDUNG

Es ist daher Aufgabe der vorliegenden Erfindung, eine Vorrichtung zur Erkennung von Feuchtigkeit zur Verfügung zu stellen, die die oben geschilderten Nachteile überwindet. Insbesondere soll die erfindungsgemäße Vorrichtung sowohl eine hohe Sensitivität zur frühzeitigen Erkennung von Undichtigkeiten bzw. von Feuchtigkeit aufweisen als auch ohne elektrische Energieversorgung auskommen.

### DARSTELLUNG DER ERFINDUNG

Zur Lösung der genannten Aufgabe ist es bei einer Vorrichtung zur Erkennung von Feuchtigkeit, umfassend zumindest eine Schnur aus einem saugfähigen Material, um die Ausbreitung von Feuchtigkeit entlang der jeweiligen Schnur zu ermöglichen, die Vorrichtung weiters umfassend ein Gehäuse aus einem feuchtigkeitsdichten Material, in welches Gehäuse die zumindest eine Schnur mit einem Endabschnitt mündet, um eine Ausbreitung der Feuchtigkeit entlang der jeweiligen Schnur bis ins Gehäuse zu ermöglichen, wobei das Gehäuse ein Sichtfenster aufweist, durch das zumindest ein im Gehäuse angeordneter Kontrollinnenraum von außen zumindest abschnittsweise einsehbar ist, wobei der zumindest eine Kontrollinnenraum dazu eingerichtet ist, ein Ansammeln von Flüssigkeit zu ermöglichen und/oder zur Anordnung von zumindest einem Feuchtigkeitsanzeigeelement, erfindungsgemäß vorgesehen, dass die zumindest eine Schnur eine Schnurfarbe aufweist, wobei die jeweilige Schnur zumindest einen Kontrastfarbabschnitt aufweist, in dem Farbpigmente in einer, vorzugsweise von der Schnurfarbe unterschiedlichen, Kontrastfarbe auf die jeweilige Schnur aufgebracht sind, um bei Ausbreitung von Feuchtigkeit entlang der jeweiligen Schnur mittransportiert zu werden, wobei im zumindest einen Kontrollinnenraum zumindest ein flächiges Feuchtigkeitsanzeigeelement aus einem saugfähigem Material mit einer von der Kontrastfarbe unterschiedlichen Anzeigeelementfarbe angeordnet ist und wobei das zumindest eine flächige Feuchtigkeitsanzeigeelement in Kontakt mit der zumindest einen Schnur ist, um eine Ablagerung von durch Feuchtigkeit entlang der jeweiligen Schnur mittransportierten Farbpigmenten am zumindest einen flächigen Feuchtigkeitsanzeigeelement zu ermöglichen.

Saugfähige Schnüre sind an sich bekannt, wobei Feuchtigkeit bzw. Flüssigkeit aufgrund von Kapillarwirkung bei Kontakt mit der jeweiligen Schnur aufgesogen wird und sich so entlang der jeweiligen Schnur ausbreitet. Bei der Flüssigkeit muss es sich nicht zwangsläufig um Wasser handeln, insbesondere nicht um reines Wasser. Beispielsweise kann die Flüssigkeit aus einer Mischung von Wasser mit zumindest einer anderen Flüssigkeit bzw. mit zumindest einem anderen Stoff bestehen, etwa mit Chlor, Seife, Shampoo, Duschgel odgl. Ebenso können Verunreinigungen unter besagte Stoffe fallen.

Entsprechend kann sich Feuchtigkeit bzw. aufgesogene Flüssigkeit entlang der jeweiligen Schnur ausbreiten, ohne dass hierfür ein bestimmtes Gefälle notwendig wäre. D.h. die jeweilige Schnur wird zunächst an einer Stelle bzw. in einem Bereich feucht, und die Feuchtigkeit breitet sich entlang der jeweiligen Schnur aus, sodass die jeweilige Schnur über einen immer größeren Teil ihrer Länge feucht wird. Letztlich kann die Feuchtigkeit so bis in den Endabschnitt der jeweiligen Schnur gelangen und somit bis ins Gehäuse - selbst wenn an sich nur relativ geringe Mengen an Feuchtigkeit im Bereich der jeweiligen Schnur vorhanden sind.

D.h. der jeweilige Endabschnitt ist im Gehäuse angeordnet.

Die jeweilige Schnur kann mit einem Abschnitt, der nicht im Gehäuse angeordnet ist, beispielsweise in einer Fuge angeordnet werden, die in weiterer Folge mit geeignetem Dichtmittel, insbesondere mit einem Silikon, abgedichtet wird. Wenn die Abdichtung undicht wird und Feuchtigkeit in die Fuge eindringt, kann diese Feuchtigkeit über die jeweilige Schnur bis ins Gehäuse gelangen. Selbst bei Haarrissen ist - auch für einen Laien - somit eine Kontrolle, ob Dichtheit noch gegeben ist, problemlos möglich.

Analog kann die jeweilige Schnur mit einem Abschnitt, der nicht im Gehäuse angeordnet ist, beispielsweise in einem abgedichteten Hohlraum, etwa unter einer Badewanne, angeordnet sein, sodass in den Hohlraum eindringende Feuchtigkeit über die jeweilige Schnur sich bis ins Gehäuse ausbreiten kann.

Das Gehäuse ist dazu eingerichtet, zumindest abschnittsweise außerhalb der Fuge bzw. des Hohlraums angeordnet zu werden, um einem Benutzer einen mühelosen Kontrollblick durch das Sichtfenster in den zumindest einen Kontrollinnenraum zu ermöglichen, um so zu prüfen, ob die Abdichtung der Fuge bzw. des Hohlraums noch in Ordnung ist oder Feuchtigkeit durchlässt. Bei der Anwendung bzw. bestimmungsgemäßen Verwendung der Vorrichtung ist eine Abdichtung des Gehäuses nach außen gegeben bzw. wird eine solche hergestellt, sodass Feuchtigkeit bzw. Flüssigkeit nur über die eine Schnur oder die mehreren Schnüre in das Gehäuse, insbesondere in den zumindest einen Kontrollinnenraum, gelangen kann. Hierzu kann das Gehäuse mit dem darin angeordneten mindestens einen Endabschnitt der jeweiligen Schnur beispielsweise mit Abdichtmittel, insbesondere mit einem Silikon, am gewünschten Ort (beispielsweise an einer Wand) befestigt und gleichzeitig abgedichtet sein.

Hierbei gibt es mehrere Möglichkeiten, wie eine Undichtigkeit bzw. Feuchtigkeit dem Benutzer angezeigt werden kann. Zum einen kann sich im zumindest einen Kontrollinnenraum aufgrund der sich entlang der zumindest einen Schnur bis ins Gehäuse ausgebreiteten Feuchtigkeit Flüssigkeit ansammeln, was für den Benutzer optisch durch das Sichtfenster erkennbar ist. Zum anderen kann alternativ oder zusätzlich zumindest ein Feuchtigkeitsanzeigeelement im zumindest einen Kontrollinnenraum angeordnet sein, um dem Benutzer besonders klar und eindeutig das Vorliegen von Feuchtigkeit bzw. Flüssigkeit im zumindest einen Kontrollinnenraum zu signalisieren. Die zumindest eine Schnur steht dabei klarerweise stets in fluidischer Verbindung mit dem zumindest einen Kontrollinnenraum, wobei diese fluidische Verbindung auch insofern indirekt realisiert sein kann, dass die zumindest eine Schnur nicht direkt in den zumindest einen Kontrollinnenraum mündet, sondern ein oder mehrere Elemente - insbesondere das zumindest eine Feuchtigkeitsanzeigeelement - bzw. ein oder mehrere Räume zwischen Schnur und Kontrollinnenraum geschaltet sind, über die die Feuchtigkeit bzw. Flüssigkeit bis in den zumindest einen Kontrollinnenraum gelangen kann. Allen diesen Anzeigemöglichkeiten gemein ist, dass hierbei keine zusätzliche Energiequelle, insbesondere keine elektrische Energie, benötigt wird. In diesem Sinne ist die erfindungsgemäße Vorrichtung ein passives Element.

Die jeweilige Schnur ist - abgesehen von einem typischen Aufbau aus mehreren Strängen, wobei jeder Strang üblicherweise mehrere Fäden aufweist - vorzugsweise als ein Schnurstück vorgesehen. Denkbar wäre es jedoch auch, dass die jeweilige Schnur aus mehreren Schnurstücken aufgebaut ist, die miteinander verbunden sind, beispielsweise durch Verknoten.

Das Gehäuse ist aus zumindest einem feuchtigkeits- bzw. flüssigkeitsdichten Material gefertigt, beispielsweise aus einem Kunststoff. Insbesondere kann recycelter Kunststoff als Material vorgesehen sein, was die Umweltfreundlichkeit erhöht.

Das Sichtfenster ist entsprechend ebenfalls feuchtigkeits- bzw. flüssigkeitsdicht und kann ebenso aus einem Kunststoff gefertigt sein, der entsprechend transparent ist. Auch hier kann recycelter Kunststoff als Material vorgesehen sein, was die Umweltfreundlichkeit weiter erhöht. Denkbar wäre aber natürlich auch Glas, insbesondere bruchfestes Glas, als Material für das Sichtfenster.

Gegenüber den enormen Reparaturkosten, die durch einen nicht bemerkten ungewünschten Feuchtigkeitseintritt entstehen können, sind die Kosten der erfindungsgemäßen Vorrichtung vernachlässigbar. Indem ein ungewünschter Feuchtigkeitseintritt mit der erfindungsgemäßen Vorrichtung zeitnah detektiert und bemerkt werden kann, hilft die Vorrichtung entsprechend, Reparaturkosten einzusparen bzw. zu vermeiden. Darüberhinaus ist ein weiterer praktischer Aspekt, dass durch die rechtzeitige Erkennung eines Feuchtigkeitseintritts und folgende Einleitung von Gegenmaßnahmen gesundheitsgefährdende Schimmelbildung verhindert werden kann.

Wie gesagt, kann das zumindest eine Feuchtigkeitsanzeigeelement dem Benutzer besonders leicht zu erkennen geben, ob Feuchtigkeit im zumindest einen Kontrollinnenraum vorliegt oder nicht. Entsprechend ist es bei einer bevorzugten Ausführungsform der erfindungsgemäßen Vorrichtung vorgesehen, dass im zumindest einen Kontrollinnenraum zumindest ein Feuchtigkeitsanzeigeelement, insbesondere ein Testpapier angeordnet ist, welches in einem trockenen Zustand eine erste Anzeigeelementfarbe aufweist und in einem feuchten Zustand eine von der ersten Anzeigeelementfarbe unterschiedliche zweite Anzeigeelementfarbe.

Derartige Feuchtigkeitsanzeigeelemente sind an sich bekannt. Beispielsweise kann es sich dabei um ein Testpapier zur Bestimmung des pH-Werts handeln. Ein weiteres Beispiel ist als "Watesmopapier" bekannt, welches sich bei Kontakt mit Wasser oder Wasserdampf (von weiß auf) blau verfärbt.

Grundsätzlich muss lediglich ein Unterschied zwischen der ersten und zweiten Anzeigeelementfarbe optisch erkennbar sein, aber die beiden Farben müssen nicht zwangsläufig extrem unterschiedlich sein. Theoretisch würde auch das Dünklerwerden eines hellen trockenen Papiers, insbesondere Löschpapiers, wenn es feucht wird, eine entsprechende Verfärbung von der ersten (hellen) auf die zweite (dünklere) Anzeigeelementfarbe darstellen.

Vorzugsweise ist das Anzeigeelement derart ausgelegt, dass die Verfärbung von der ersten auf die zweite Anzeigeelementfarbe irreversibel ist, also die zweite Anzeigeelementfarbe dauerhaft sichtbar bleibt, auch wenn das Anzeigeelement wieder trocknen sollte. Entsprechend ist eine dauerhafte Anzeige der vorhandenen Feuchtigkeit sichergestellt, was beispielsweise dann vorteilhaft ist, wenn lange Kontrollintervalle vorgesehen sind, sodass auch in solchen Fällen der Feuchtigkeitseintritt beim Blick durch das Sichtfenster klar erkennbar ist.

Um eine besonders eindeutige Signalisierung von Feuchtigkeit zu ermöglichen, die für den Benutzer sofort leicht erkennbar ist, ist es bei der erfindungsgemäßen Vorrichtung vorgesehen, dass die zumindest eine Schnur eine Schnurfarbe aufweist, wobei die jeweilige Schnur zumindest einen Kontrastfarbabschnitt aufweist, in dem Farbpigmente in einer, vorzugsweise von der Schnurfarbe unterschiedlichen, Kontrastfarbe auf die jeweilige Schnur aufgebracht sind, um bei Ausbreitung von Feuchtigkeit entlang der jeweiligen Schnur mittransportiert zu werden, wobei im zumindest einen Kontrollinnenraum zumindest ein flächiges Feuchtigkeitsanzeigeelement aus einem saugfähigem Material mit einer von der Kontrastfarbe unterschiedlichen Anzeigeelementfarbe angeordnet ist und wobei das zumindest eine flächige Feuchtigkeitsanzeigeelement in Kontakt mit der zumindest einen Schnur ist, um eine Ablagerung von durch Feuchtigkeit entlang der jeweiligen Schnur mittransportierten Farbpigmenten am zumindest einen flächigen Feuchtigkeitsanzeigeelement zu ermöglichen.

Die Anzeigeelementfarbe betrifft zumindest einen Ausgangszustand bzw. einen trockenen Zustand des flächigen Feuchtigkeitsanzeigeelements - analog zur oben genannten ersten Anzeigeelementfarbe. Eine Verfärbung des flächigen Feuchtigkeitsanzeigeelements in einem feuchten Zustand unabhängig von der Ablagerung der Farbpigmente - analog zur oben genannten zweiten Anzeigeelementfarbe - kann dabei möglich sein bzw. ist nicht ausgeschlossen.

Die Farbpigmente selbst sind dabei per Definition nicht in der Flüssigkeit, insbesondere in Wasser, löslich, vgl. z.B. https://de.wikipedia.org/wiki/Pigmente.

Theoretisch wäre es daher auch denkbar, dass die Schnurfarbe und die Kontrastfarbe gleich sind, solange nur die Farbpigmente mit der Kontrastfarbe mit der Feuchtigkeit bzw. Flüssigkeit mittransportiert und am flächigen Feuchtigkeitsanzeigeelement abgelagert werden können, da dessen Anzeigeelementfarbe sich von der Kontrastfarbe unterscheidet. In praktischer Hinsicht ist jedoch bei der Handhabung auch eine von der Kontrastfarbe unterschiedliche Schnurfarbe vorteilhaft.

Sollte die jeweilige Schnur zunächst in einem Abschnitt ohne Kontrastfarbe feucht werden, kann der Mittransport der Farbpigmente klarerweise ab dann erfolgen, wenn die sich entlang der jeweiligen Schnur aufgrund der Kapillarwirkung ausbreitende Feuchtigkeit einen, vorzugsweise den nächstgelegenen, Kontrastabschnitt erreicht hat.

Indem das Feuchtigkeitsanzeigeelement flächig gewählt ist, kann zum einen eine relativ große Oberfläche des Feuchtigkeitsanzeigeelements zur Verfügung gestellt werden, was eine hohe Saugwirkung, die wiederum durch Kapillarwirkung hervorgerufen ist, begünstigt. Zum anderen begünstigt dies die optische Erkennbarkeit einer Verfärbung durch den Eintrag bzw. die Ablagerung der Farbpigmente.

Vorzugsweise befindet sich bei dieser Ausführungsform der erfindungsgemäßen Vorrichtung der Endabschnitt der mindestens einen Schnur ebenfalls im zumindest einen Kontrollinnenraum.

Um den Kontakt zwischen dem Endabschnitt der zumindest einen Schnur und dem mindestens einen flächigen Feuchtigkeitsanzeigeelement zu optimieren, kann vorgesehen sein, dass der Endabschnitt der zumindest einen Schnur und das mindestens eine flächige Feuchtigkeitsanzeigeelement gegeneinander gepresst sind, wobei hier in der Regel keine hohen Drücke notwendig sind, sondern lediglich ein guter Kontakt zwischen der jeweiligen Schnur und dem jeweiligen flächigen Feuchtigkeitsanzeigeelement garantiert werden soll.

Um die Handhabung der Vorrichtung und/oder die Erkennbarkeit der Signalisierung von Feuchtigkeit zu optimieren, ist es bei einer besonders bevorzugten Ausführungsform der erfindungsgemäßen Vorrichtung vorgesehen, dass als Schnurfarbe Weiß vorgesehen ist und/oder als Kontrastfarbe Rot und/oder als Anzeigeelementfarbe Weiß. Entsprechend stark sind die resultierenden Kontraste zwischen Schnurfarbe und Kontrastfarbe einerseits und zwischen Kontrastfarbe und Anzeigeelementfarbe andererseits.

Bei einer besonders bevorzugten Ausführungsform der erfindungsgemäßen Vorrichtung ist vorgesehen, dass entlang des Verlaufs der jeweiligen Schnur mehrere voneinander beabstandete Kontrastfarbabschnitte angeordnet sind. Hierdurch kann einerseits eine besonders große Menge an Farbpigmenten im zumindest einen flächigen Feuchtigkeitsanzeigeelement abgelagert werden, um die Signalwirkung zu maximieren. Andererseits kann beim Ausbau der jeweiligen Schnur eine Ausbreitungsrichtung der Feuchtigkeitsausbreitung entlang der jeweiligen Schnur optisch erkannt werden. Typischerweise sind dabei nicht alle Kontrastfarbabschnitte komplett bzw. gleich stark von der Feuchtigkeit ausgewaschen, sondern ist eine Abnahme der noch in den Kontrastfarbabschnitten vorhandenen Farbpigmente optisch erkennbar - in Richtung des Ursprungs der eingetretenen Feuchtigkeit. Insbesondere bei mehreren Schnüren, die in unterschiedliche Richtungen verlaufend angeordnet sind, kann so jene Stelle, wo die Undichtigkeit zuerst aufgetreten ist, mitunter relativ genau festgestellt werden.

Bei einer besonders bevorzugten Ausführungsform der erfindungsgemäßen Vorrichtung ist vorgesehen, dass jeweils zwei aufeinander folgende Kontrastfarbabschnitte zueinander einen Abstand im Bereich von 3 cm bis 10 cm aufweisen. In aufwendigen Versuchen konnte ermittelt werden, dass ein derartig gewählter Abstand einen optimalen Kompromiss darstellt, um, wie oben geschildert, einerseits die Signalwirkung zu maximieren und andererseits eine relativ genaue Detektion des Ursprungsorts der Undichtigkeit zu ermöglichen. Der genannte Abstand ist dabei klarerweise entlang des Verlaufs der jeweiligen Schnur gemessen.

Gemäß dem oben Gesagten ist es bei einer bevorzugten Ausführungsform der erfindungsgemäßen Vorrichtung vorgesehen, dass mehrere, insbesondere zwei, Schnüre vorgesehen sind.

Bei einer besonders bevorzugten Ausführungsform der erfindungsgemäßen Vorrichtung ist vorgesehen, dass mehrere Kontrollinnenräume vorgesehen sind, wobei zumindest zwei, vorzugsweise sämtliche, Schnüre unterschiedlichen Kontrollinnenräumen zugeordnet sind. Entsprechend kann der Benutzer optisch bereits bei Blick auf die Kontrollinnenräume erkennen, aus welcher Richtung die Feuchtigkeit kommt, ohne dass die gesamte Vorrichtung bzw. alle Schnüre demontiert werden müssen. Die Sanierung der Abdichtung kann entsprechend gezielt erfolgen.

Vorzugsweise sind die Kontrollinnenräume dabei feuchtigkeits- bzw. flüssigkeitsdicht voneinander getrennt, beispielsweise durch jeweils zumindest eine Trennwand zwischen zwei benachbarten Kontrollinnenräumen.

Grundsätzlich können die eine oder mehreren Schnüre aus unterschiedlichsten Materialien hergestellt sein, etwa aus Kunststoff. Um eine zuverlässig hohe Saugleistung zu garantieren, ist es bei einer bevorzugten Ausführungsform der erfindungsgemäßen Vorrichtung vorgesehen, dass das Material der jeweiligen Schnur Wolle, insbesondere Baumwolle oder Schafwolle, und/oder Biogewebe umfasst, wobei das Biogewebe insbesondere ein hanfbasiertes Biogewebe ist und/oder Zellstoff aus Baumrinde umfasst. Zudem sind diese Materialien besonders umweltfreundlich, was als weiterer erheblicher Vorteil zu werten ist.

Analog kann das Material des zumindest einen, insbesondere flächigen, Anzeigeelements Textilgewebe und/oder Biogewebe und/oder Watte umfassen, wobei das Biogewebe insbesondere ein hanfbasiertes Biogewebe ist und/oder Zellstoff aus Baumrinde umfasst.

Um die Saugleistung zu optimieren, ist es bei einer bevorzugten Ausführungsform der erfindungsgemäßen Vorrichtung vorgesehen, dass die jeweilige Schnur mehrere miteinander verflochtene Stränge umfasst und jeder Strang mehrere Fäden aufweist, wobei die Anzahl an Strängen im Bereich von 6 bis 21, bevorzugt von 10 bis 20, liegt und/oder die Anzahl an Fäden im Bereich von 3 bis 9. Insbesondere die Anzahlangabe der Fäden ist dabei so zu verstehen, dass bei einer entsprechenden Schnur die Stränge nicht notwendigerweise alle dieselbe Anzahl von Fäden aufweisen müssen, sondern auch Stränge mit einer unterschiedlichen Anzahl an Fäden denkbar sind, wobei die spezifische Anzahl an Fäden bei jedem Strang im angegebenen Bereich liegt.

In aufwendigen Versuchen wurde ermittelt, dass diese Konfiguration zumindest einen Zwischenraum zwischen den Fäden bzw. Strängen ergibt, der eine besonders hohe Kapillarwirkung gewährleistet, welche wiederum eine ideale Saugleistung ergibt.

Bei einer bevorzugten Ausführungsform der erfindungsgemäßen Vorrichtung ist vorgesehen, dass die jeweilige Schnur vom Gehäuse bis zu einem freien Ende eine Länge im Bereich von 30 cm bis 300 cm, bevorzugt von 50 cm bis 150 cm, aufweist und/oder einen Durchmesser im Bereich von 3 mm bis 7 mm. Dies gewährleistet eine optimale Einsatzgröße, insbesondere eine optimale Einsatzlänge, welche eine rasche Signalisierung - auch bei relativ wenig zu transportierender Feuchtigkeit - erlaubt. Die Durchmesser im angegeben Bereich wiederum gewährleisten eine optimale Unterbringung in typischen Fugen, wie sie etwa im Sanitärbereich üblicherweise auftreten, insbesondere bei der Verwendung/Verbauung von plattenförmigen Elementen wie z.B. von Fliesen, Glaselementen, Steinen, PVC-Platten oder Schichtstoffplatten. Im Folgenden sind, wann immer von "Fliesen" die Rede ist, generell plattenförmige Elemente zu verstehen, die an einer Mauer (ggf. inkl. Putz) befestigt werden können, also **z.B.** auch Glaselemente, Steine, PVC-Platten oder Schichtstoffplatten, sofern nichts anderes angegeben ist.

Bei einer besonders bevorzugten Ausführungsform der erfindungsgemäßen Vorrichtung ist vorgesehen, dass das zumindest eine flächige Feuchtigkeitsanzeigeelement durch zumindest ein Löschblatt ausgebildet ist. Hierdurch wird eine gute Saugleistung des jeweiligen flächigen Feuchtigkeitsanzeigeelements sichergestellt, da es sich bei Löschblättern in der Regel um ungeleimtes und wenig gepresstes Papier handelt, das aufgrund dieses lockeren Aufbaus feine Kapillaren bildet, die Flüssigkeiten schnell aufsaugen, vgl. https://de.wikipedia.org/wiki/L%C3%B6schpapier. Gleichzeitig sind Löschblätter, die manchmal auch als Vliespapiere, Fließpapiere oder Saugpapiere bezeichnet werden, kommerziell äußerst günstig verfügbar.

Dabei kann das jeweilige Löschblatt einfach an den zumindest einen Kontrollinnenraum angepasst werden, insbesondere indem das jeweilige Löschblatt auf die gewünschte Größe zugeschnitten werden kann.

Bei einer bevorzugten Ausführungsform der erfindungsgemäßen Vorrichtung ist vorgesehen, dass das Gehäuse aus mehreren, insbesondere zwei, Teilen besteht, die miteinander verbunden sind, vorzugsweise mittels eines Einrastmechanismus. Dies kann vor allem die Herstellung der Vorrichtung erleichtern.

Insbesondere kann so der zumindest eine Kontrollinnenraum zunächst - bevor die Teile verbunden sind und das Gehäuse somit verschlossen ist - bequem zugänglich sein, um beispielsweise das zumindest eine, insbesondere flächige, Feuchtigkeitsanzeigeelement darin anzuordnen. Vorzugsweise kann so das zumindest eine Löschblatt im zumindest einen Kontrollinnenraum angeordnet werden.

Ebenso kann ein geöffnetes Gehäuse vorteilhaft sein, um den jeweiligen Endabschnitt der zumindest einen Schnur im Gehäuse, insbesondere im zumindest einen Kontrollinnenraum, einfach anordnen zu können.

Das Verbinden der Teile bzw. Verschließen des Gehäuses kann beispielsweise so realisiert sein, dass ein Gehäusewandelement mit einem zweiten Teil, der gewissermaßen einen Rahmen bildet, der wiederum das Sichtfenster umfassen kann, verrastbar ist. Dabei kann der Rahmen beispielsweise Elemente aufweisen, die elastisch verformbar sind, um das Einrasten bzw. Verrasten des Rahmens mit dem Gehäusewandelement zu erlauben.

Grundsätzlich sind aber Einrastmechanismen in unterschiedlichsten Formen an sich bekannt.

Theoretisch wäre es denkbar, das Gehäuse so auszuführen, dass dieses nach dem Verschließen auch wieder geöffnet und wieder verschlossen werden kann, etwa um einen Austausch der zumindest einen Schnur oder ggf. des zumindest einen Feuchtigkeitsanzeigeelements vornehmen und das Gehäuse entsprechend wiederverwenden zu können.

In der Praxis ist es aber für die meisten Anwendungsfälle aus Sicherheitsgründen vorteilhaft, ein - im Wesentlichen zerstörungsfreies - Öffnen des Gehäuses zu vermeiden, um bei bestimmungsgemäßer Verwendung des Gehäuses Manipulationen durch den Benutzer und/oder ein Eindringen von Feuchtigkeit in das Gehäuse auf anderen Wegen als über die zumindest eine Schnur ausschließen zu können. D.h. indem ein Öffnen nach dem Verschließen des Gehäuses nicht vorgesehen ist, wird die Gewährleistung der zuverlässigen Funktion der Vorrichtung erhöht.

Bei einer bevorzugten Ausführungsform der erfindungsgemäßen Vorrichtung ist vorgesehen, dass das Gehäuse einen nach außen offenen Hohlraum aufweist, der mit Dichtmittel, insbesondere Silikon, auffüllbar ist, um das Gehäuse an einer Wand zu befestigen. Dies erlaubt eine einfache, dichte Montage an der Wand oder aber natürlich auch an anderen, insbesondere ebenen, Elementen. Hier und im Folgenden ist "Wand" so zu verstehen, dass diese Fliesen - oder andere plattenförmige Elemente (z.B. Glaselemente, Steine, PVC-Platten oder Schichtstoffplatten) - mitumfassen kann, sodass das Gehäuse bei seiner Befestigung an der Wand an einer oder mehreren Fliesen - bzw. an einem oder mehreren plattenförmigen Elementen - befestigt wird. D.h. die Wand kann eine Mauer inkl. Putz odgl. umfassen, auf welcher Mauer wiederum Fliesen angebracht sein können, welche ebenfalls zur Wand gehören.

Dabei kann vorgesehen sein, dass die zumindest eine Schnur über zumindest eine Öffnung ins Gehäuse geführt ist, welche Öffnung beim Auffüllen des Hohlraums mit Silikon ebenfalls abgedichtet wird.

Es ist vorstellbar, dass der Hohlraum zumindest abschnittsweise durch das oben erwähnte Gehäusewandelement begrenzt bzw. ausgebildet sein kann.

Bei einer bevorzugten Ausführungsform der erfindungsgemäßen Vorrichtung ist vorgesehen, dass die Vorrichtung ein dem Sichtfenster gegenüberliegendes Gehäusewandelement aufweist, welches für jede Schnur je eine Durchführungsöffnung aufweist, durch die die jeweilige Schnur mit ihrem Endabschnitt in das Gehäuse geführt ist. Dies gewährleistet eine strukturell und ökonomisch besonders günstige Realisierung des Gehäuses, dessen Teil das Gehäusewandelement ist, wobei die zumindest eine Schnur mit ihrem Endabschnitt einfach in das Gehäuse eingeführt werden kann.

Dabei kann vorgesehen sein, dass die zumindest eine Schnur mit ihrem Endabschnitt durch das Gehäusewandelement direkt in den zumindest einen Kontrollinnenraum eingeführt werden kann. D.h. es kann vorgesehen sein, dass das Gehäusewandelement den zumindest einen Kontrollinnenraum begrenzt.

Weiters kann mit dem Gehäusewandelement eine strukturell und ökonomisch günstige Möglichkeit für ein zwei- oder mehrteiliges, ggf. wiederverschließbares, Gehäuse geschaffen werden, wie weiter oben bereits ausgeführt.

Bei einer besonders bevorzugten Ausführungsform der erfindungsgemäßen Vorrichtung ist vorgesehen, dass im Bereich der jeweiligen Durchführungsöffnung zumindest ein Fixierelement, vorzugsweise in Form zumindest eines Dorns, angeordnet ist, um die jeweilige Schnur in der jeweiligen Durchführungsöffnung zu fixieren, insbesondere festzuklemmen. Hierdurch wird eine besonders große Stabilität der Schnuranordnung gewährleistet, was wiederum die Montage vereinfacht und die Zuverlässigkeit der Vorrichtung weiter erhöht.

Bei einer besonders bevorzugten Ausführungsform der erfindungsgemäßen Vorrichtung ist vorgesehen, dass der jeweilige Endabschnitt der zumindest einen Schnur zumindest abschnittsweise zwischen dem Gehäusewandelement und dem Sichtfenster, vorzugsweise unter Zwischenlage zumindest eines flächigen Feuchtigkeitsanzeigeelements, eingeklemmt ist. Für den Benutzer erhöht sich damit die Sicherheit, etwaige Feuchtigkeit zuverlässig und rechtzeitig detektieren bzw. bemerken zu können.

Insbesondere kann hierdurch ein optimaler Eintrag der Farbpigmente im zumindest einen flächigen Feuchtigkeitsanzeigeelement durch optimierten Kontakt zwischen dem Endabschnitt der zumindest einen Schnur und dem mindestens einen flächigen Feuchtigkeitsanzeigeelement gewährleistet werden. Wie gesagt, kann es sich bei dem zumindest einen flächigen Feuchtigkeitsanzeigeelement um zumindest ein Löschblatt handeln. Vorzugsweise ergibt sich dabei folgende Abfolge: das Sichtfenster - das zumindest eine flächige Feuchtigkeitsanzeigeelement - der zumindest eine Endabschnitt - das Gehäusewandelement.

Bei einer besonders bevorzugten Ausführungsform der erfindungsgemäßen Vorrichtung ist vorgesehen, dass das Gehäusewandelement zumindest einen Abstandhalter, vorzugsweise in Form zumindest einer Noppe, aufweist, um einen Mindestabstand zwischen dem Sichtfenster und einer Vorderseite des Gehäusewandelements zu gewährleisten. Hierdurch kann beispielsweise eine Beschädigung des zumindest einen flächigen Feuchtigkeitsanzeigeelements, insbesondere Löschblatts, durch Reißen aufgrund eines zu hohen Drucks auf das zumindest eine flächige Feuchtigkeitsanzeigeelement zuverlässig verhindert werden. Hierbei kann insbesondere sichergestellt werden, dass die eine Schnur oder die mehreren Schnüre nicht beliebig stark zwischen dem Sichtfenster und der Vorderseite des Gehäusewandelements zusammengedrückt wird/werden und ihrerseits wiederum entsprechend erhöhten Druck auf das flächige Feuchtigkeitsanzeigeelement ausübt/ausüben. Der besagte erhöhte Druck würde wiederum zu einer erhöhten Wahrscheinlichkeit der Beschädigung des zumindest einen flächigen Feuchtigkeitsanzeigeelements führen.

Ebenso ist denkbar, dass so ein gewisses Mindestvolumen des Kontrollinnenraums gewährleistet werden kann, in dem sich ggf. Flüssigkeit ansammeln kann.

Bei einer besonders bevorzugten Ausführungsform der erfindungsgemäßen Vorrichtung ist vorgesehen, dass das Gehäusewandelement auf einer dem Sichtfenster abgewandten Seite in einem Randbereich eine abstehende Präzisionsschiene aufweist, die bei einer Befestigung des Gehäuses an einer Wand im Bereich einer Fuge zumindest abschnittsweise in der Fuge anordenbar ist. Dies gewährleistet eine definierte Orientierung des Gehäuses bei der Montage.

Dabei stellt die Anordnung der Präzisionsschiene im Randbereich sicher, dass die Präzisionsschiene unter einem die Fuge begrenzenden Rand, insbesondere Fliesenrand, angeordnet werden kann, was einer erhöhte Präzision bei der Anordnung des Gehäuses relativ zur Fuge erlaubt, damit die zumindest eine Schnur in der Fuge problemlos angeordnet und mit ihrem Endabschnitt ins Gehäuse geführt werden kann.

Eine Oberseite der Präzisionsschiene kann dabei zumindest abschnittsweise am Rand, insbesondere Fliesenrand, anliegen, wodurch eine besonders präzise Positionierung des Gehäuses relativ zur Fuge erzielbar ist und damit eine besonders problemlose Anordnung der zumindest einen Schnur in der Fuge und eine besonders problemlose Führung des jeweiligen Endabschnitts der zumindest einen Schnur ins Gehäuse.

Weiters kann durch geeignete Dimensionierung der Präzisionsschiene ein Mindestabstand des restlichen Gehäuses von der Wand erzielt werden, indem eine Stirnseite der Präzisionsschiene bei der Anordnung in der Fuge sich an einer Mauer (inkl. Putz odgl.) abstützt bzw. diese kontaktiert. Auch dies verbessert die oben geschilderte Präzision der Anordnung des Gehäuses relativ zur Fuge mit den damit verbundenen Vorteilen hinsichtlich der Schnuranordnung in der Fuge und Schnurführung ins Gehäuse.

Falls die Präzisionsschiene nicht in die Fuge eingeführt wird, sondern sich mit ihrer Stirnseite direkt an der Wand, insbesondere Fliese, abstützt, kann die Präzisionsschiene natürlich ebenso einen entsprechenden - größeren - Mindestabstand des restlichen Gehäuses zur Wand gewährleisten, was in manchen Anwendungssituationen wünschenswert sein kann und die Flexibilität der Vorrichtung entsprechend erhöht.

Bei einer besonders bevorzugten Ausführungsform der erfindungsgemäßen Vorrichtung ist vorgesehen, dass das Gehäusewandelement mehrere Durchführungsöffnungen aufweist, wobei das Gehäusewandelement zumindest eine abstehende Trennwand aufweist, die zwischen zwei der Durchführungsöffnungen angeordnet ist, wobei die zumindest eine Trennwand auf einer dem Sichtfenster abgewandten Seite des Gehäusewandelements angeordnet ist, wobei vorzugsweise jeweils zwischen benachbarten Durchführungsöffnungen je eine Trennwand angeordnet ist. Hierdurch wird bei mehreren Schnüren, die mit ihren Endabschnitten durch die Durchführungsöffnungen geführt sind, sichergestellt, dass sich die Feuchtigkeit, die sich entlang einer der Schnüre ausbreitet, sich nicht außerhalb des Gehäuses auf eine benachbarte Schnur ausbreiten kann und so das Messergebnis in gewisser Weise verfälscht wird. Dies erleichtert somit die Bestimmung des Ursprungsorts der Feuchtigkeit. Wenn beispielsweise zwei Schnüre vorgesehen sind und nur eine davon mit der Feuchtigkeit in Berührung kommt, wird auch nur diese eine Schnur Feuchtigkeit aufweisen, wenn die Schnüre freigelegt werden, was wiederum eine zumindest grobe Lokalisierung des Ursprungsorts der Feuchtigkeit ermöglicht.

Selbstverständlich wirkt sich die bewirkte Trennung der Schnüre außerhalb des Gehäuses auch bei dem weiter oben beschriebenen Vorliegen mehrerer, insbesondere feuchtigkeitsdicht voneinander getrennten, Kontrollinnenräume vorteilhaft dahingehend aus, dass das Messergebnis nicht verfälscht wird. Somit kann in diesem Fall durch optische Inspektion von außen durch das Sichtfenster besonders zuverlässig eine Aussage darüber getroffen werden, ob die Feuchtigkeit aus einer bestimmten bzw. aus welcher Richtung kommt.

Zudem kann so das Ausmaß an Feuchtigkeit bzw. Flüssigkeit zumindest qualitativ angezeigt werden, insbesondere weil ein stärkeres optisches Signal zu erwarten ist, wenn Feuchtigkeit/Flüssigkeit über mehrere Schnüre gleichzeitig ins Gehäuse bzw. in den mindestens einen Kontrollraum eintritt, als wenn dies **z.B.** nur über eine Schnur der Fall ist.

Bei einer besonders bevorzugten Ausführungsform der erfindungsgemäßen Vorrichtung ist vorgesehen, dass die zumindest eine Trennwand bündig an die Präzisionsschiene, vorzugsweise in einem rechten Winkel, anschließt. Dies erlaubt eine strukturell einfache und besonders stabile Herstellung der Trennwand. Weiters wird die Zuverlässigkeit der Abdichtung bzw. fluidischen Trennung benachbarter Schnüre, die durch die Trennwand strukturell voneinander getrennt sind, erhöht.

Gemäß dem oben Gesagten ist erfindungsgemäß eine Anordnung umfassend eine erfindungsgemäße Vorrichtung vorgesehen, wobei die zumindest eine Schnur in zumindest einer Fuge angeordnet ist und die zumindest eine Fuge mit Dichtmittel, insbesondere Silikon, verschlossen ist und wobei das Gehäuse zumindest abschnittsweise außerhalb der zumindest einen Fuge angeordnet und nach außen abgedichtet ist, wobei das Gehäuse vorzugsweise an einer Wand befestigt ist. Wie oben bereits erläutert, kann das Gehäuse dabei insbesondere abdichtend an der Wand befestigt sein.

Bei einer bevorzugten Ausführungsform der erfindungsgemäßen Anordnung ist vorgesehen, dass in der mindestens einen Fuge eine Rundschnur zur Hinterfüllung angeordnet ist. Der Einsatz von derlei Rundschnüren kann - beispielsweise in Abhängigkeit von landesspezifischen Vorschriften - bei Fugenabdichtungen vorgeschrieben sein, wobei die erfindungsgemäße Vorrichtung auch in solchen Fällen problemlos verwendet werden kann, ebenso wie in Fällen, wo keine Rundschnüre zur Hinterfüllung vorgesehen sind. Typischerweise sind solche Rundschnüre aus Polyethylenschaum (PE-Schaum) oder Polyurethan (PUR) gefertigt.

Die Anwendungsgebiete der erfindungsgemäßen Vorrichtung sind mannigfaltig. Entsprechend ist erfindungsgemäß die Verwendung der erfindungsgemäßen Vorrichtung zur Überwachung und Erkennung von Feuchtigkeit in Hohlräumen und/oder bei bzw. in Fugenabdichtungen, insbesondere im Sanitärbereich oder bei Aquarien oder bei Schwimmbecken, vorgesehen. Die genannten Fugenabdichtungen können dabei nicht nur in Gebäuden vorhanden sein, sondern beispielsweise auch auf Yachten. Typische Anwendungsfälle treten dabei auf bei Küchen, Wartungsfugen, WCs, Anschlussfugen, Rohranschlüssen, Duschtassen, Badewannen, begehbaren Duschen, Fenstern etc. Es sei betont, dass der genannte Sanitärbereich im weitesten Sinne zu verstehen ist und etwa auch bei Hotels, Pensionen, Einfamilienhäusern, Schulen, Campingplätzen, Wohnwägen, Bädern - inkl. Freibäder, Hallenbäder und Thermen -, Fitnesscentern, Krankenhäusern odgl. vorgesehen sein kann.

Beim Einsatz der erfindungsgemäßen Vorrichtung zur Kontrolle von Anschlussfugen bei Schwimmbecken kann es vorgesehen sein, dass das Gehäuse im Betrieb unter Wasser angeordnet ist, wobei das Gehäuse jedoch analog zu den obigen Ausführungen feuchtigkeits- bzw. flüssigkeitsdicht an der Schwimmbeckenwand angeordnet ist. Entsprechend kann zur Sichtkontrolle getaucht werden, um einen Blick durch das Sichtfenster zu werfen.

Auch die genannten Hohlräume sind im weitesten Sinne zu verstehen und umfassen beispielsweise Hohlräume für Rohranschlüsse, Wasserleitungen, Versorgungsleitungen für Schwimmbäder (z.B. Versorgungsleitungen für Chloranlagen), Wartungsschächte odgl.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Ausführungsform einer erfindungsgemäßen Vorrichtung in einer schematischen Frontansicht
- Fig. 2: eine schematische seitliche Schnittansicht gemäß der Schnittlinie II in Fig. 1, wobei Pfeile die Blickrichtung andeuten
- Fig. 3: eine schematische Rückansicht der Vorrichtung aus Fig. 1
- Fig. 4: eine schematische Frontansicht eines Gehäusewandelements
- Fig. 5: eine schematische Seitenansicht des Gehäusewandelements
- Fig. 6: eine schematische Rückansicht des Gehäusewandelements
- Fig. 7: eine Anordnung der Vorrichtung bei einer Dusche
- Fig. 8: eine Verwendung der Vorrichtung bei einer abgedichteten Fuge bei einer Badewanne
- Fig. 9: eine Verwendung der Vorrichtung bei einem Hohlraum unter einer Badewanne
- Fig. 10: eine schematische Teilschnittansicht zu Fig. 9
- Fig. 11: eine schematische Darstellung des Aufbaus einer Schnur des gezeigten Ausführungsbeispiels der Vorrichtung
- Fig. 12: eine schematische Darstellung analog zu Fig. 2, wobei ein Gehäuse der Vorrichtung an einer Wand befestigt ist

### WEGE ZUR AUSFÜHRUNG DER ERFINDUNG

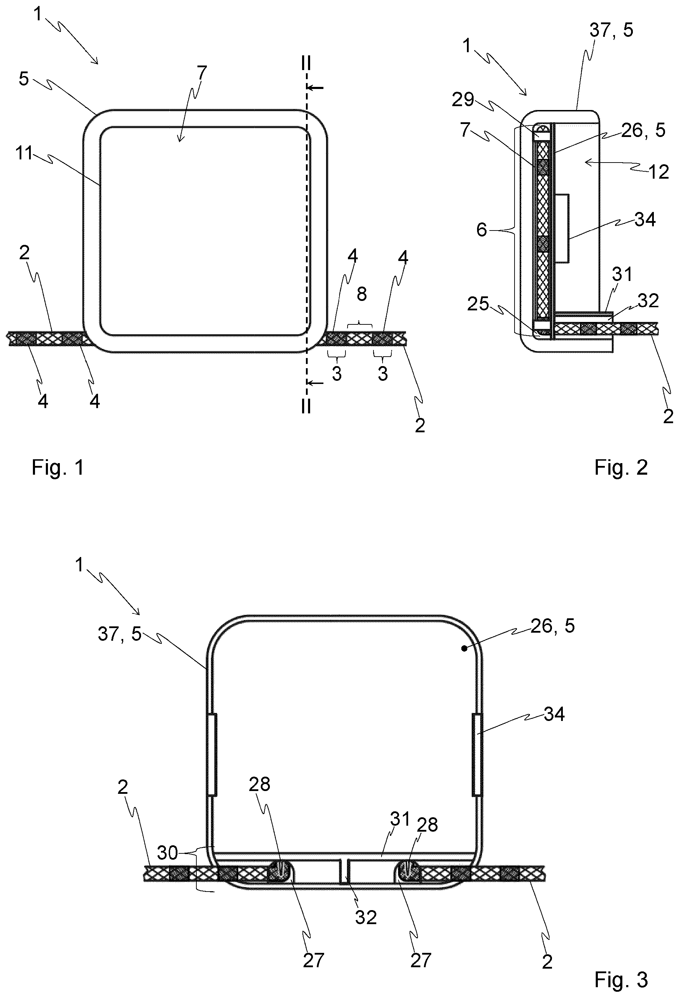

In der schematischen Frontansicht der Fig. 1 ist eine Ausführungsform einer erfindungsgemäßen Vorrichtung 1 zur Erkennung von Feuchtigkeit dargestellt. Fig. 2 zeigt eine zugehörige schematische Schnittansicht gemäß der Schnittlinie II in Fig. 1, wobei Pfeile die Blickrichtung andeuten. Fig. 3 zeigt schließlich eine zugehörige schematische Rückansicht der Vorrichtung aus Fig. 1.

Die Vorrichtung 1 umfasst im dargestellten Ausführungsbeispiel zwei Schnüre 2 aus einem saugfähigen Material, um die Ausbreitung von Feuchtigkeit entlang der jeweiligen Schnur 2 zu ermöglichen. Weiters umfasst die Vorrichtung 1 ein Gehäuse 5 aus einem feuchtigkeitsdichten Material, in welches Gehäuse 5 die Schnüre 2 jeweils mit einem Endabschnitt 6 münden, um eine Ausbreitung der Feuchtigkeit entlang der jeweiligen Schnur 2 bis ins Gehäuse 5 zu ermöglichen. Das Gehäuse weist 5 ein Sichtfenster 11 auf, durch das ein im Gehäuse 5 angeordneter Kontrollinnenraum 25 von außen zumindest abschnittsweise einsehbar ist.

Grundsätzlich ist der Kontrollinnenraum 25 dazu eingerichtet, ein Ansammeln von Flüssigkeit zu ermöglichen und/oder zur Anordnung von zumindest einem Feuchtigkeitsanzeigeelement. Im dargestellten Ausführungsbeispiel ist ein flächiges Feuchtigkeitsanzeigeelement in Form eines Löschblatts 7 im Kontrollinnenraum 25 angeordnet, welches durch das Sichtfenster 11 sichtbar ist und in Fig. 1 das ganze Sichtfenster 11 ausfüllt.

Um eine besonders eindeutige Signalisierung von Feuchtigkeit zu ermöglichen, die für einen Benutzer sofort leicht erkennbar ist, ist bei der gezeigten Ausführungsform der Vorrichtung 1 vorgesehen, dass die Schnüre 2 eine Schnurfarbe aufweisen, wobei die jeweilige Schnur 2 mehrere Kontrastfarbabschnitte 3 aufweist, die entlang des Verlaufs der jeweiligen Schnur 2 voneinander beabstandet angeordnet sind und in denen jeweils Farbpigmente 4 in einer von der Schnurfarbe unterschiedlichen Kontrastfarbe auf die jeweilige Schnur 2 aufgebracht sind, um bei Ausbreitung von Feuchtigkeit entlang der jeweiligen Schnur 2 mittransportiert zu werden. Das im Kontrollinnenraum 25 angeordnete Löschblatt 7 stellt, wie gesagt ein flächiges Feuchtigkeitsanzeigeelement aus einem saugfähigem Material dar und weist eine Anzeigeelementfarbe auf, die ebenfalls von der Kontrastfarbe unterschiedlich ist. Dabei ist das Löschblatt 7 in Kontakt mit den Schnüren 2 bzw. mit den Endabschnitten 6 der Schnüre 2, um eine Ablagerung von durch Feuchtigkeit entlang der jeweiligen Schnur 2 mittransportierten Farbpigmenten 4 am Löschblatt 7 zu ermöglichen. Entsprechend weiß der Benutzer, sobald er die Farbpigmente 4 am Löschblatt 7 sieht bzw. die durch die Farbpigmente 4 bewirkte Einfärbung des Löschblatts 7, dass Feuchtigkeit im Bereich von zumindest einer der Schnüre 2 vorliegt.

Im dargestellten Ausführungsbeispiel ist als Schnurfarbe ein Weiß vorgesehen ist, als Kontrastfarbe ein Rot und als Anzeigeelementfarbe ebenfalls ein Weiß, welches nicht zwangsläufig identisch mit dem Weiß, welches als Schnurfarbe vorgesehen ist, sein muss, sondern beispielsweise etwas dünkler sein kann. Es ergibt sich somit ein hoher Kontrast zwischen der Anzeigeelementfarbe und der Kontrastfarbe, was die Signalerkennbarkeit für den Benutzer weiter erhöht.

Indem pro Schnur 2 mehrere Kontrastfarbabschnitte 3 mit Farbpigmenten 4 vorgesehen sind, kann einerseits eine besonders große Menge an Farbpigmenten 4 im Löschblatt 7 abgelagert werden, um die Signalwirkung zu maximieren. Andererseits kann beim Ausbau der jeweiligen Schnur 2 eine Ausbreitungsrichtung der Feuchtigkeitsausbreitung entlang der jeweiligen Schnur 2 optisch erkannt werden.

Im dargestellten Ausführungsbeispiel weisen dabei jeweils zwei aufeinanderfolgende Kontrastfarbabschnitte 3 zueinander einen Abstand 8 (vgl. Fig. 1) im Bereich von 3 cm bis 10 cm auf. Der genannte Abstand 8 ist dabei entlang des Verlaufs der jeweiligen Schnur 2 gemessen und stellt einen optimalen Kompromiss dar, um, wie oben geschildert, einerseits die Signalwirkung zu maximieren und andererseits eine relativ genaue Detektion des Ursprungsorts der Undichtigkeit zu ermöglichen.

Bei der dargestellten Ausführungsform der Vorrichtung 1 umfasst das Material der Schnüre 2 Wolle, insbesondere Baumwolle oder Schafwolle, was einerseits eine hohe Saugleistung und andererseits eine große Umweltfreundlichkeit garantiert.

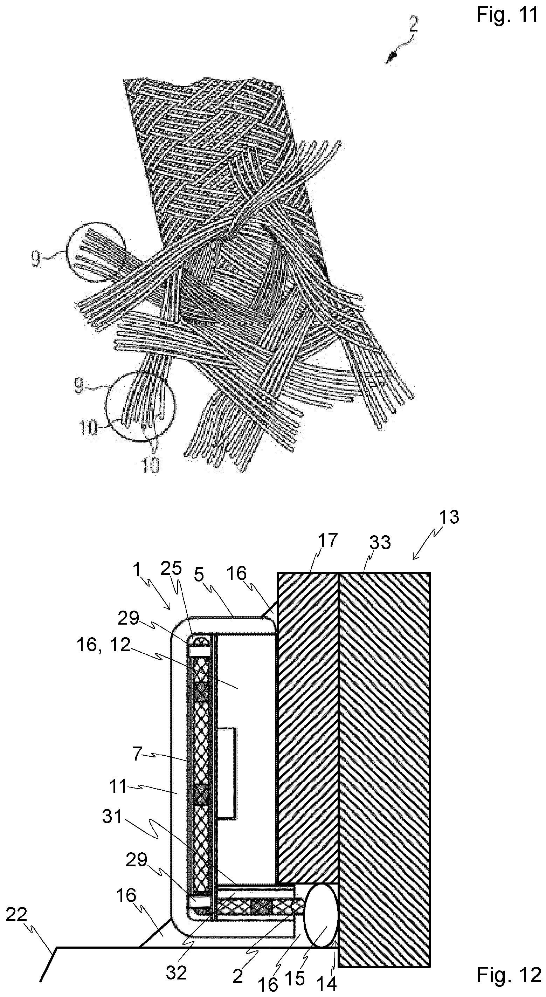

Der konkrete Aufbau der Schnüre 2 der dargestellten Ausführungsform der Vorrichtung 1 ist in Fig. 11 illustriert. Die jeweilige Schnur 2 umfasst mehrere miteinander verflochtene Stränge 9, und jeder Strang 9 weist mehrere Fäden 10 auf, wobei die Anzahl an Strängen 9 im dargestellten Ausführungsbeispiel zwölf beträgt und die Anzahl an Fäden 10 im Bereich von fünf bis sechs liegt. Letzteres ist so zu verstehen, dass beim dargestellten Ausführungsbeispiel die Stränge 9 der jeweiligen Schnur 2 nicht alle dieselbe Anzahl von Fäden 10 aufweisen, sondern manche Stränge 9 fünf Fäden 10 aufweisen und manche Stränge 9 sechs Fäden 10. Eine hohe Kapillarwirkung ist hierdurch gewährleistet, welche wiederum eine hohe Saugleistung ergibt.

Im dargestellten Ausführungsbeispiel ist vorgesehen, dass die jeweilige Schnur 2 vom Gehäuse 5 bis zu einem freien Ende eine Länge im Bereich von 30 cm bis 300 cm, aufweist und einen Durchmesser im Bereich von 3 mm bis 7 mm. Diese Länge erlaubt eine rasche Signalisierung - auch bei relativ wenig zu transportierender Feuchtigkeit. Der genannte Durchmesser gewährleistet eine optimale Unterbringung in typischen Fugen 14, wie sie etwa im Sanitärbereich üblicherweise auftreten, insbesondere bei der Verwendung/Verbauung von Fliesen.

Im dargestellten Ausführungsbeispiel ist das Gehäuse 5 mittels eines Einrastmechanismus 34 verschlossen, was die Herstellung erleichtert. Dabei weist das Gehäuse 5 ein Gehäusewandelement 26 auf, welches mit einem zweiten Gehäuseteil 37 (vgl. Fig. 3), der gewissermaßen einen Rahmen bildet, der wiederum das Sichtfenster 11 umfasst, verrastbar ist. Hierzu umfasst der Einrastmechanismus 34 Elemente am zweiten Gehäuseteil 37, die elastisch verformbar sind, um das Einrasten bzw. Verrasten des zweiten Gehäuseteils 37 mit dem Gehäusewandelement 26 bzw. mit entsprechenden Gegenstücken (nicht dargestellt), die am Gehäusewandelement 26 vorgesehen sind, zu erlauben - insbesondere nachdem die Endabschnitte 6 und das Löschblatt 7 im Kontrollinnenraum 25 angeordnet worden sind.

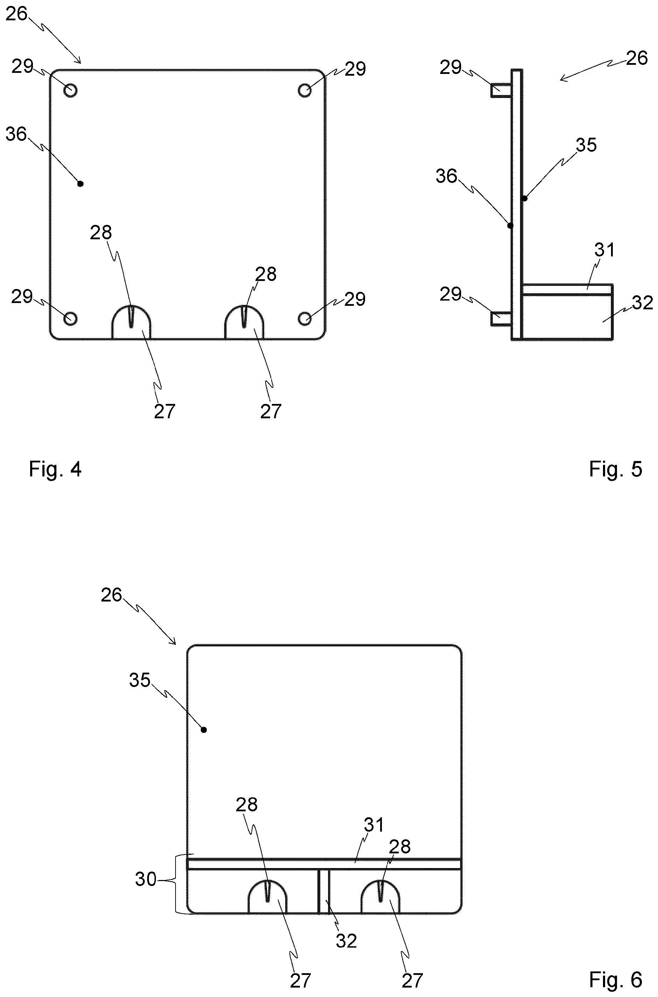

Wie bereits aus Fig. 3 hervorgeht, weist das Gehäusewandelement 26, welches - im geschlossenen Zustand des Gehäuses 5 - dem Sichtfenster 11 gegenüberliegend angeordnet ist, für jede Schnur 2 eine Durchführungsöffnung 27, also insgesamt zwei Durchführungsöffnungen 27, auf. Jede Schnur 2 ist mit ihrem Endabschnitt 6 durch die Durchführungsöffnung 27 in das Gehäuse 5 bzw. den Kontrollinnenraum 25 geführt. Um die jeweilige Schnur 2 in der jeweiligen Durchführungsöffnung 27 zu fixieren bzw. festzuklemmen, ist gemäß dem dargestellten Ausführungsbeispiel im Bereich der jeweiligen Durchführungsöffnung 27 ein Dorn 28 angeordnet, vgl. insbesondere Fig. 4.

Wie in Fig. 2 ersichtlich ist, ist der jeweilige Endabschnitt 6 der jeweiligen Schnur 2 zwischen dem Gehäusewandelement 26 und dem Sichtfenster 11 unter Zwischenlage des Löschblatts 7 eingeklemmt. Hierdurch ist ein optimaler Kontakt für die Feuchtigkeitsausbreitung und den Transport der Farbpigmente 4 zwischen den Endabschnitten 6 der Schnüre 2 und dem Löschblatt 7 sichergestellt.

Das Gehäusewandelement 26 weist dabei Abstandhalter 29 in Form von Noppen auf, um einen Mindestabstand zwischen dem Sichtfenster 11 und dem Gehäusewandelement 26, genauer einer Vorderseite 36 des Gehäusewandelements 26, zu gewährleisten, vgl. Fig. 5. Die Abstandhalter 29 stehen dabei von der dem Sichtfenster 11 zugewandten Vorderseite 36 des Gehäusewandelements 26 ab. Insbesondere kann so ein zu großer Druck der Endabschnitte 6 auf das Löschblatt 7 vermieden werden, der zu einer Beschädigung des Löschblatts 7 führen würde.

Auf einer dem Sichtfenster 11 abgewandten Rückseite 35 weist das Gehäusewandelement 26 in einem Randbereich 30 eine abstehende Präzisionsschiene 31 auf, die bei einer Befestigung des Gehäuses 5 an einer Wand 13 im Bereich einer Fuge 14 zumindest abschnittsweise in der Fuge 14 anordenbar ist. Weiters ist an der Rückseite 35 eine abstehende Trennwand 32 vorgesehen, die zwischen den beiden Durchführungsöffnungen 27 angeordnet ist, um die Schnüre 2 voneinander zu trennen. Um besagte Trennung zu optimieren, schließt die Trennwand 32 bündig an die Präzisionsschiene 31 an, wobei die Trennwand 32 an die Präzisionsschiene 31 in einem rechten Winkel anschließt, vgl. Fig. 6. Ein Übertritt von Feuchtigkeit von einer der beiden Schnüre 2 auf die andere außerhalb des Gehäuses 5 kann so - zumindest im Bereich der Trennwand 32 - praktisch ausgeschlossen werden.

Die jeweilige Schnur 2 kann mit einem Abschnitt, der nicht im Gehäuse 5 angeordnet ist, beispielsweise in einer Fuge 14 angeordnet werden, die in weiterer Folge mit geeignetem Dichtmittel, insbesondere mit einem Silikon 16, abgedichtet wird. Wenn die Abdichtung undicht wird und Feuchtigkeit in die Fuge 14 eindringt, kann diese Feuchtigkeit über die jeweilige Schnur 2 bis ins Gehäuse 5 bzw. den Kontrollinnenraum 25 gelangen und dabei Farbpigmente 4 aus den Kontrastfarbabschnitten 3 ins Löschblatt 7 transportieren. Selbst bei Haarrissen ist - auch für einen Laien - somit eine Kontrolle, ob Dichtheit noch gegeben ist, problemlos möglich.

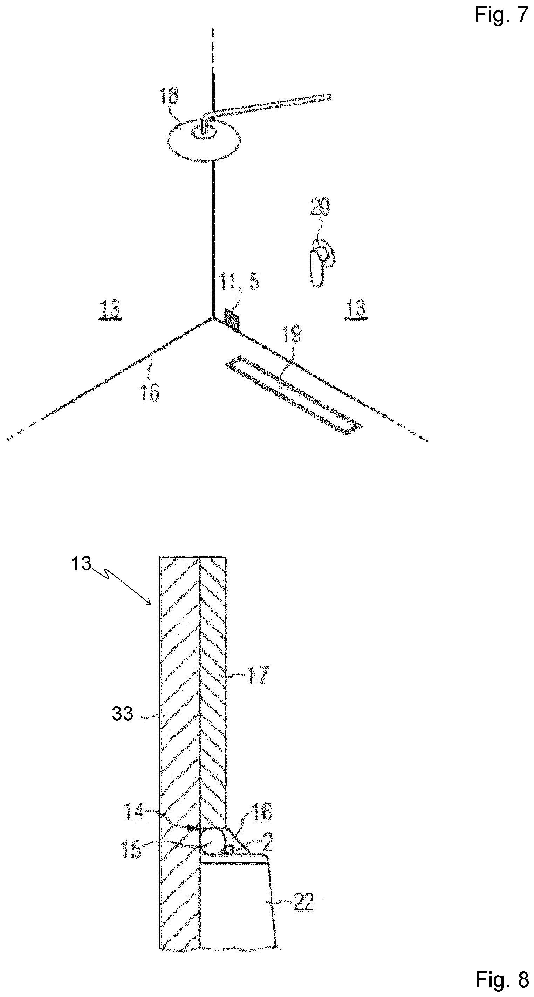

Fig. 7 illustriert eine entsprechende Verwendung der Vorrichtung bzw. eine Anordnung umfassend die Vorrichtung 1 am Beispiel einer Dusche, welche einen Duschkopf 18, Wände 13, eine Armatur 20 und einen Abfluss 19 aufweist. Die Vorrichtung 1 weist zwei Schnüre 2 auf, die mit Abschnitten, die außerhalb des Gehäuses 5 angeordnet sind, im Bodenbereich in Fugen 14 angeordnet sind, welche Fugen 14 mit Silikon 16 abgedichtet bzw. verschlossen sind.

In den Fugen 14 kann außerdem jeweils eine Rundschnur 15 zur Hinterfüllung angeordnet sein, wie dies in Fig. 8 anhand einer Fuge 14, die von einer Fliese 17, einer Mauer 33 und einem Rand einer Badewanne 22 begrenzt ist, illustriert ist, wobei das Gehäuse 5 aus Klarheitsgründen in Fig. 8 nicht gezeigt ist. Die jeweilige Rundschnur 15 ist dabei typischerweise wesentlich dicker als die jeweilige Schnur 2 und wird in die Fuge 14 so gequetscht, dass ein Querschnitt der Rundschnur 15 etwas verformt wird. Üblicherweise wird dabei der Querschnitt der Rundschnur 15 so verformt, dass aus dem im Wesentlichen kreisförmigen Querschnitt ein im Wesentlichen ellipsenförmiger Querschnitt wird, der in Richtung einer von der Mauer 33 weg weisenden Öffnung der Fuge 14 größer ist als zwischen der Badewanne 22 und der Fliese 17, wobei besagte Verformung in Fig. 8 aus Klarheitsgründen jedoch nicht eingezeichnet ist.

Im Falle der in Fig. 7 beispielhaft gezeigten Verwendung der Vorrichtung 1 bei einer Dusche ist das Gehäuse 5 ebenfalls im Bodenbereich an einer der Wände 13 befestigt. Zur dichten Befestigung weist das Gehäuse 5 einen nach außen offenen Hohlraum 12 auf (vgl. Fig. 2), der vom Gehäusewandelement 26, insbesondere von dessen Rückseite 35, und dem zweiten Gehäuseteil 37 abschnittsweise begrenzt wird und mit Dichtmittel bzw. Silikon 16 aufgefüllt ist. D.h. mit diesem Silikon 16 ist das Gehäuse 5 an der Wand 13 angeklebt.

Darüberhinaus wird das Gehäuse 5 - typischerweise mit dem Silikon 16 - auch nach außen abgedichtet, sodass Feuchtigkeit bzw. Flüssigkeit nur über die Schnüre 2 - und nicht etwa direkt durch die Durchführungsöffnungen 27 - in das Gehäuse 5, insbesondere in den Kontrollinnenraum 25, eindringen kann. Dies ist in Fig. 12 illustriert, wo das Gehäuse 5 mittels Silikon 16 in einem oberen Bereich an der Fliese 17 und in einem unteren Bereich an der Badewanne 22 nach außen abgedichtet ist.

Die Funktion der Präzisionsschiene 31 zur präzisen Ausrichtung des Gehäuses 5 relativ zur Fuge 14 ist ebenfalls in Fig. 12 illustriert. Eine Oberseite der Präzisionsschiene 31 liegt dabei abschnittsweise am Rand einer Fliese 17 an, wodurch eine besonders präzise Positionierung des Gehäuses 5 relativ zur Fuge 14 erzielbar ist und damit eine besonders problemlose Anordnung der zumindest einen Schnur 2 bzw. der Schnüre 2 in der Fuge 14 und eine besonders problemlose Führung des jeweiligen Endabschnitts 6 ins Gehäuse 5. Auch in Fig. 12 ist eine Rundschnur 15 zur Hinterfüllung der Fuge 14 vorgesehen, wobei der in Fig. 12 sichtbare Querschnitt der Rundschnur 15 nur der Einfachheit halber so gewählt wurde. Typischerweise ist auch in diesem Fall von einem verformten Querschnitt der Rundschnur 15 auszugehen, wie dies oben geschildert ist, nämlich von einem im Wesentlichen ellipsenförmigen Querschnitt, der in Richtung einer von der Mauer 33 weg weisenden Öffnung der Fuge 14 größer ist als zwischen der Badewanne 22 und der Fliese 17.

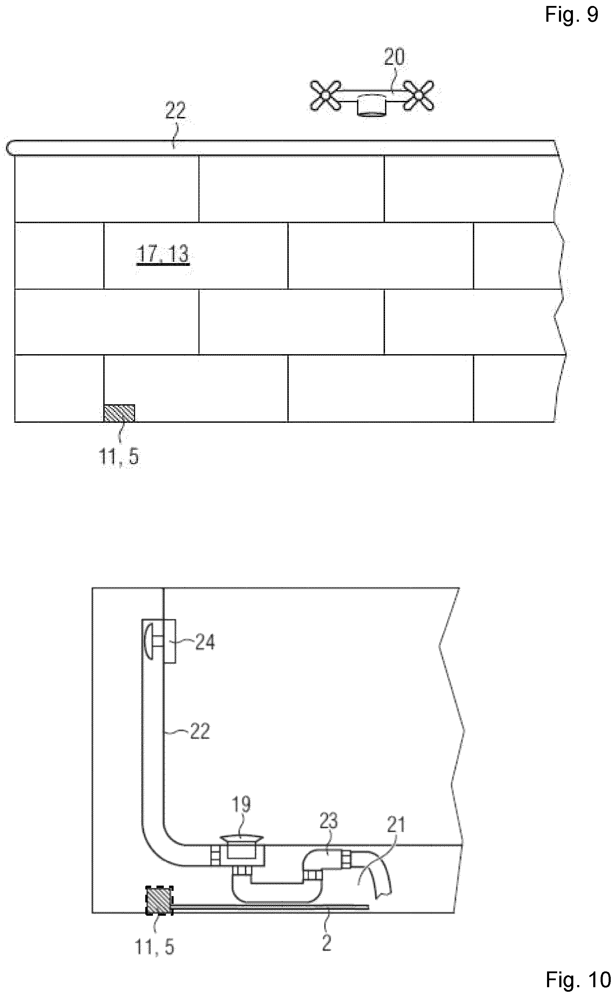

Ein weiteres Anwendungsbeispiel ist in Fig. 9 und Fig. 10 illustriert und betrifft die Detektion des Eintritts von Feuchtigkeit in einen abgedichteten Hohlraum 21. Letzterer ist im gezeigten Beispiel unter einer Badewanne 22 angeordnet, welche einen Überlauf 24 aufweist und zu der die Armatur 20 gehört. Die Badewanne 22 ist von einer Wand 13 mit Fliesen 17 eingefasst. An dieser Wand 13 ist das Gehäuse 5 angeordnet, wobei das Sichtfenster 11 für den Benutzer gut zugänglich ist, vgl. Fig. 9.

Im Hohlraum 21 ist ein Siphon 23 angeordnet sowie zumindest eine Schnur 2, die in das Gehäuse 5 mündet, welches in Fig. 10 lediglich zur Verdeutlichung von dessen Position außen an der Wand 13 gezeigt ist, was wiederum durch die strichlierte Umrandung verdeutlicht ist. Falls z.B. der Siphon 23 undicht wird, kann sich die Feuchtigkeit über die Schnur 2 bis ins Gehäuse 5 bzw. den Kontrollinnenraum 25 ausbreiten und Farbpigmente 4 aus den Kontrastfarbabschnitten 3 im Löschblatt 7 einlagern. Entsprechend kann der Benutzer sofort von außen durch das Sichtfenster 11 die Verfärbung des Löschblatts 7 erkennen und Gegenmaßnahmen einleiten.

### BEZUGSZEICHENLISTE

- 1: Vorrichtung
- 2: Schnur
- 3: Kontrastfarbabschnitt
- 4: Farbpigmente
- 5: Gehäuse
- 6: Endabschnitt
- 7: Löschblatt
- 8: Abstand
- 9: Strang
- 10: Faden
- 11: Sichtfenster
- 12: Hohlraum (nach außen offen)
- 13: Wand
- 14: Fuge
- 15: Rundschnur
- 16: Silikon
- 17: Fliese
- 18: Duschkopf
- 19: Abfluss
- 20: Armatur
- 21: Hohlraum
- 22: Badewanne
- 23: Siphon
- 24: Überlauf
- 25: Kontrollinnenraum
- 26: Gehäusewandelement
- 27: Durchführungsöffnung
- 28: Dorn
- 29: Abstandhalter
- 30: Randbereich
- 31: Präzisionsschiene
- 32: Trennwand
- 33: Mauer
- 34: Einrastmechanismus
- 35: Rückseite des Gehäusewandelements
- 36: Vorderseite des Gehäusewandelements
- 37: Zweiter Gehäuseteil

## Patentansprüche

1. Vorrichtung (1) zur Erkennung von Feuchtigkeit, umfassend zumindest eine Schnur (2) aus einem saugfähigen Material, um die Ausbreitung von Feuchtigkeit entlang der jeweiligen Schnur (2) zu ermöglichen,
die Vorrichtung (1) weiters umfassend ein Gehäuse (5) aus einem feuchtigkeitsdichten Material, in welches Gehäuse (5) die zumindest eine Schnur (2) mit einem Endabschnitt (6) mündet, um eine Ausbreitung der Feuchtigkeit entlang der jeweiligen Schnur (2) bis ins Gehäuse (5) zu ermöglichen,
wobei das Gehäuse (5) ein Sichtfenster (11) aufweist, durch das zumindest ein im Gehäuse (5) angeordneter Kontrollinnenraum (25) von außen zumindest abschnittsweise einsehbar ist,
wobei der zumindest eine Kontrollinnenraum (25) dazu eingerichtet ist, ein Ansammeln von Flüssigkeit zu ermöglichen und/oder zur Anordnung von zumindest einem Feuchtigkeitsanzeigeelement (7), **dadurch gekennzeichnet, dass** die zumindest eine Schnur (2) eine Schnurfarbe aufweist, wobei die jeweilige Schnur (2) zumindest einen Kontrastfarbabschnitt (3) aufweist, in dem Farbpigmente (4) in einer, vorzugsweise von der Schnurfarbe unterschiedlichen, Kontrastfarbe auf die jeweilige Schnur (2) aufgebracht sind, um bei Ausbreitung von Feuchtigkeit entlang der jeweiligen Schnur (2) mittransportiert zu werden,
wobei im zumindest einen Kontrollinnenraum (25) zumindest ein flächiges Feuchtigkeitsanzeigeelement (7) aus einem saugfähigem Material mit einer von der Kontrastfarbe unterschiedlichen Anzeigeelementfarbe angeordnet ist und wobei das zumindest eine flächige Feuchtigkeitsanzeigeelement (7) in Kontakt mit der zumindest einen Schnur (2) ist, um eine Ablagerung von durch Feuchtigkeit entlang der jeweiligen Schnur (2) mittransportierten Farbpigmenten (4) am zumindest einen flächigen Feuchtigkeitsanzeigeelement (7) zu ermöglichen.

2. Vorrichtung (1) nach Anspruch 1, **dadurch gekennzeichnet, dass** im zumindest einen Kontrollinnenraum (25) zumindest ein Feuchtigkeitsanzeigeelement (7), insbesondere ein Testpapier angeordnet ist, welches in einem trockenen Zustand eine erste Anzeigeelementfarbe aufweist und in einem feuchten Zustand eine von der ersten Anzeigeelementfarbe unterschiedliche zweite Anzeigeelementfarbe.

3. Vorrichtung (1) nach einem der Ansprüche 1 bis 2, **dadurch gekennzeichnet, dass** als Schnurfarbe Weiß vorgesehen ist und/oder als Kontrastfarbe Rot und/oder als Anzeigeelementfarbe Weiß.

4. Vorrichtung (1) nach einem der Ansprüche 1 bis 3, **dadurch gekennzeichnet, dass** entlang des Verlaufs der jeweiligen Schnur (2) mehrere voneinander beabstandete Kontrastfarbabschnitte (3) angeordnet sind,
wobei vorzugsweise jeweils zwei aufeinander folgende Kontrastfarbabschnitte (3) zueinander einen Abstand (8) im Bereich von 3 cm bis 10 cm aufweisen.

5. Vorrichtung (1) nach einem der Ansprüche 1 bis 4, **dadurch gekennzeichnet, dass** mehrere, insbesondere zwei, Schnüre (2) vorgesehen sind,
wobei vorzugsweise mehrere Kontrollinnenräume (25) vorgesehen sind, wobei zumindest zwei, besonders bevorzugt sämtliche, Schnüre (2) unterschiedlichen Kontrollinnenräumen (25) zugeordnet sind.

6. Vorrichtung (1) nach einem der Ansprüche 1 bis 5, **dadurch gekennzeichnet, dass** das Material der jeweiligen Schnur (2) Wolle, insbesondere Baumwolle oder Schafwolle, und/oder Biogewebe umfasst, wobei das Biogewebe insbesondere ein hanfbasiertes Biogewebe ist und/oder Zellstoff aus Baumrinde umfasst.

7. Vorrichtung (1) nach einem der Ansprüche 1 bis 6, **dadurch gekennzeichnet, dass** die jeweilige Schnur (2) vom Gehäuse (5) bis zu einem freien Ende eine Länge im Bereich von 30 cm bis 300 cm, bevorzugt von 50 cm bis 150 cm, aufweist und/oder einen Durchmesser im Bereich von 3 mm bis 7 mm.

8. Vorrichtung (1) nach einem der Ansprüche 1 bis 7, **dadurch gekennzeichnet, dass** das Gehäuse (5) einen nach außen offenen Hohlraum (12) aufweist, der mit Dichtmittel, insbesondere Silikon (16), auffüllbar ist, um das Gehäuse (5) an einer Wand (13) zu befestigen.

9. Vorrichtung (1) nach einem der Ansprüche 1 bis 8, **dadurch gekennzeichnet, dass** die Vorrichtung (1) ein dem Sichtfenster (11) gegenüberliegendes Gehäusewandelement (26) aufweist, welches für jede Schnur (2) je eine Durchführungsöffnung (27) aufweist, durch die die jeweilige Schnur (2) mit ihrem Endabschnitt (6) in das Gehäuse (5) geführt ist,
wobei vorzugsweise im Bereich der jeweiligen Durchführungsöffnung (27) zumindest ein Fixierelement angeordnet ist, um die jeweilige Schnur (2) in der jeweiligen Durchführungsöffnung (27) zu fixieren.

10. Vorrichtung (1) nach Anspruch 9, **dadurch gekennzeichnet, dass** der jeweilige Endabschnitt (6) der zumindest einen Schnur (2) zumindest abschnittsweise zwischen dem Gehäusewandelement (26) und dem Sichtfenster (11), vorzugsweise unter Zwischenlage des zumindest einen flächigen Feuchtigkeitsanzeigeelements (7), eingeklemmt ist.

11. Vorrichtung (1) nach einem der Ansprüche 9 bis 10, **dadurch gekennzeichnet, dass** das Gehäusewandelement (26) zumindest einen Abstandhalter (29), vorzugsweise in Form zumindest einer Noppe, aufweist, um einen Mindestabstand zwischen dem Sichtfenster (11) und einer Vorderseite (36) des Gehäusewandelements (26) zu gewährleisten.

12. Vorrichtung (1) nach einem der Ansprüche 9 bis 11, **dadurch gekennzeichnet, dass** das Gehäusewandelement (26) auf einer dem Sichtfenster (11) abgewandten Seite (35) in einem Randbereich (30) eine abstehende Präzisionsschiene (31) aufweist, die bei einer Befestigung des Gehäuses (5) an einer Wand (13) im Bereich einer Fuge (14) zumindest abschnittsweise in der Fuge (14) anordenbar ist.

13. Vorrichtung (1) nach einem der Ansprüche 9 bis 12, **dadurch gekennzeichnet, dass** das Gehäusewandelement (26) mehrere Durchführungsöffnungen (27) aufweist, wobei das Gehäusewandelement (26) zumindest eine abstehende Trennwand (32) aufweist, die zwischen zwei der Durchführungsöffnungen (27) angeordnet ist, wobei die zumindest eine Trennwand (32) auf einer dem Sichtfenster (11) abgewandten Seite des Gehäusewandelements (26) angeordnet ist,
wobei vorzugsweise jeweils zwischen benachbarten Durchführungsöffnungen (27) je eine Trennwand (32) angeordnet ist.

14. Anordnung umfassend eine Vorrichtung (1) nach einem der Ansprüche 1 bis 13, wobei die zumindest eine Schnur (2) in zumindest einer Fuge (14) angeordnet ist und die zumindest eine Fuge (14) mit Dichtmittel, insbesondere Silikon (16), verschlossen ist und wobei das Gehäuse (5) zumindest abschnittsweise außerhalb der zumindest einen Fuge (14) angeordnet und nach außen abgedichtet ist, wobei das Gehäuse (15) vorzugsweise an einer Wand (13) befestigt ist.

15. Verwendung der Vorrichtung (1) nach einem der Ansprüche 1 bis 14 zur Überwachung und Erkennung von Feuchtigkeit in Hohlräumen (21) und/oder bei Fugenabdichtungen, insbesondere im Sanitärbereich oder bei Aquarien oder bei Schwimmbecken.

## Claims

1. A device (1) for detecting moisture, comprising at least one cord (2) made of an absorbent material in order to allow moisture to spread along the respective cord (2), the device (1) further comprising a housing (5) made of a moisture-tight material, into which housing (5) an end portion (6) of the at least one cord (2) leads in order to allow the moisture to spread along the respective cord (2) into the housing (5),
wherein the housing (5) has a viewing window (11) through which at least one monitoring interior (25) arranged in the housing (5) can be at least partially viewed from the outside,
wherein the at least one monitoring interior (25) is configured to allow liquid to collect and/or for the arrangement of at least one moisture indicating element (7), **characterized in that** the at least one cord (2) has a cord colour, wherein the respective cord (2) has at least one contrast colour portion (3), in which colour pigments (4) in a contrast colour, which is preferably different from the cord colour, are applied to the respective cord (2) in order to be co-transported along the respective cord (2) as moisture spreads,
wherein at least one planar moisture indicating element (7) made of an absorbent material having an indicating element colour different from the contrast colour is arranged in the at least one monitoring interior (25),
and wherein the at least one planar moisture indicating element (7) is in contact with the at least one cord (2) in order to allow colour pigments (4) co-transported by moisture along the respective cord (2) to be deposited on the at least one planar moisture indicating element (7).

2. The device (1) according to claim 1, **characterized in that** at least one moisture indicating element (7), in particular a test paper, is arranged in the at least one monitoring interior (25), and, in a dry state, has a first indicating element colour and, in a moist state, has a second indicating element colour different from the first indicating element colour.

3. The device (1) according to any one of claims 1 to 2, **characterized in that** white is provided as cord colour and/or red as contrast colour and/or white as indicating element colour.

4. The device (1) according to any one of claims 1 to 3, **characterized in that** a plurality of mutually spacedapart contrast colour portions (3) are arranged along the course of the respective cord (2), wherein preferably each two successive contrast colour portions (3) have a distance (8) from one another in the range of from 3 cm to 10 cm.

5. The device (1) according to any one of claims 1 to 4, **characterized in that** a plurality of, in particular two, cords (2) are provided,
wherein preferably a plurality of monitoring interiors (25) are provided, wherein at least two, particularly preferably all, cords (2) are associated with different monitoring interiors (25).

6. The device (1) according to any one of claims 1 to 5, **characterized in that** the material of the respective cord (2) comprises wool, in particular cotton wool or sheep's wool, and/or bio-fabric, wherein the bio-fabric in particular is a hemp-based bio-fabric and/or comprises pulp from tree bark.

7. The device (1) according to any one of claims 1 to 6, **characterized in that** the respective cord (2), from the housing (5) to a free end, has a length in the range of from 30 cm to 300 cm, preferably from 50 cm to 150 cm, and/or a diameter in the range of from 3 mm to 7 mm.

8. The device (1) according to any one of claims 1 to 7, **characterized in that** the housing (5) has an outwardly open cavity (12), which can be filled with sealant, in particular silicone (16), in order to secure the housing (5) to a wall (13).

9. The device (1) according to any one of claims 1 to 8, **characterized in that** the device (1) has a housing wall element (26), which is opposite the viewing window (11) and which has a respective feedthrough opening (27) for each cord (2), through which respective feedthrough opening the respective cord (2) is guided with its end portion (6) into the housing (5),
wherein preferably at least one fixing element is arranged in the region of the respective feedthrough opening (27) in order to fix the respective cord (2) in the respective feedthrough opening (27).

10. The device (1) according to claim 9, **characterized in that** the respective end portion (6) of the at least one cord (2) is at least partially clamped between the housing wall element (26) and the viewing window (11), preferably with the at least one planar moisture indicating element (7) arranged in between.

11. The device (1) according to any one of claims 9 to 10, **characterized in that** the housing wall element (26) has at least one spacer (29), preferably in the form of at least one nub, in order to ensure a minimum distance between the viewing window (11) and a front side (36) of the housing wall element (26).

12. The device (1) according to any one of claims 9 to 11, **characterized in that** the housing wall element (26), on a side (35) facing away from the viewing window (11), in an edge region (30), has a protruding precision rail (31), which, when the housing (5) is being secured to a wall (13), can be arranged in the region of a joint (14) at least partially in the joint (14).

13. The device (1) according to any one of claims 9 to 12, **characterized in that** the housing wall element (26) has a plurality of feedthrough openings (27), wherein the housing wall element (26) has at least one protruding partition wall (32), which is arranged between two of the feedthrough openings (27), wherein the at least one partition wall (32) is arranged on a side of the housing wall element (26) facing away from the viewing window (11),
wherein preferably a partition wall (32) is arranged in each case between adjacent feedthrough openings (27).

14. An arrangement comprising a device (1) according to any one of claims 1 to 13, wherein the at least one cord (2) is arranged in at least one joint (14) and the at least one joint (14) is closed by sealant, in particular silicone (16),
and wherein the housing (5) is arranged at least partially outside the at least one joint (14) and is sealed outwardly, wherein the housing (15) is preferably secured to a wall (13).

15. Use of the device (1) according to any one of claims 1 to 14 for monitoring and detecting moisture in cavities (21) and/or at joint seals, in particular in the sanitary field or in aquariums or in swimming pools.

## Revendications

1. Dispositif (1) destiné à détecter l'humidité, comprenant au moins une ficelle (2) fabriquée en un matériau absorbant afin de permettre à l'humidité de se répartir le long de la ficelle (2) respective,
le dispositif (1) comprenant en outre un boîtier (5) fabriqué en un matériau étanche à l'humidité, boîtier dans lequel (5) pénètre une partie d'extrémité (6) de l'au moins une ficelle (2) afin de permettre à l'humidité de se répartir le long de la ficelle (2) respective jusqu'à l'intérieur du boîtier (5),
dans lequel le boîtier (5) présente une fenêtre d'observation (11) à travers laquelle au moins un intérieur de surveillance (25) agencé dans le boîtier (5) peut être au moins partiellement observé depuis l'extérieur,
dans lequel l'au moins un intérieur de surveillance (25) est conçu pour permettre au liquide de s'accumuler et/ou pour l'agencement d'au moins un élément indicateur d'humidité (7), **caractérisé en ce que** l'au moins une ficelle (2) présente une couleur de ficelle, dans lequel la ficelle (2) respective présente au moins une partie de couleur de contraste (3), dans laquelle des pigments colorés (4) dans une couleur de contraste qui est de préférence différente de la couleur de ficelle sont appliqués à la ficelle (2) respective afin d'être co-transportés le long de la ficelle (2) respective à mesure que l'humidité se répartit,
dans lequel au moins un élément indicateur d'humidité (7) plan fabriqué en un matériau absorbant ayant une couleur d'élément indicateur différente de la couleur de contraste est agencé dans l'au moins un intérieur de surveillance (25),
et dans lequel l'au moins un élément indicateur d'humidité (7) plan est en contact avec l'au moins une ficelle (2) afin de permettre à des pigments colorés (4) co-transportés par l'humidité le long de la ficelle (2) respective d'être déposés sur l'au moins un élément indicateur d'humidité (7) plan.

2. Dispositif (1) selon la revendication 1, **caractérisé en ce que** au moins un élément indicateur d'humidité (7), en particulier un papier de test, est agencé dans l'au moins intérieur de surveillance (25), et, dans un état sec, présente une première couleur d'élément indicateur et, dans un état humide, présente une seconde couleur d'élément indicateur différente de la première couleur d'élément indicateur.

3. Dispositif (1) selon l'une des revendications 1 à 2, **caractérisé en ce que** le blanc est pourvu en tant que couleur de ficelle et/ou le rouge est pourvu en tant que couleur de contraste et/ou le blanc est pourvu en tant que couleur d'élément indicateur.

4. Dispositif (1) selon l'une des revendications 1 à 3, **caractérisé en ce que** une pluralité de parties de couleur de contraste (3) espacées les unes des autres sont agencées sur la longueur de la ficelle (2) respective, dans lequel de préférence dans chaque paire de parties de couleur de contraste (3) successives, les parties de couleur de contraste ont une distance (8) l'une de l'autre dans la plage de 3 cm à 10 cm.

5. Dispositif (1) selon l'une des revendications 1 à 4, **caractérisé en ce que** une pluralité de, en particulier deux, ficelles (2) sont pourvues,
dans lequel de préférence une pluralité d'intérieurs de surveillance (25) sont pourvus, dans lequel au moins deux ficelles, particulièrement préférentiellement toutes les ficelles (2), sont associées à des intérieurs de surveillance (25) différents.

6. Dispositif (1) selon l'une des revendications 1 à 5, **caractérisé en ce que** le matériau de la ficelle (2) respective comprend de la laine, en particulier de la laine de coton ou de la laine de mouton, et/ou un biotissu, dans lequel le biotissu est en particulier un biotissu basé sur le chanvre et/ou comprend de la pulpe d'écorce d'arbre.

7. Dispositif (1) selon l'une des revendications 1 à 6, **caractérisé en ce que** la ficelle (2) respective, depuis le boîtier (5) jusqu'à une extrémité libre, présente une longueur dans la plage de 30 cm à 300 cm, de préférence de 50 cm à 150 cm, et/ou un diamètre dans la plage de 3 mm à 7 mm.

8. Dispositif (1) selon l'une des revendications 1 à 7, **caractérisé en ce que** le boîtier (5) présente une cavité ouverte vers l'extérieur (12), qui peut être remplie de produit de scellement, en particulier de silicone (16), afin de fixer le boîtier (5) à un mur (13).

9. Dispositif (1) selon l'une des revendications 1 à 8, **caractérisé en ce que** le dispositif (1) présente un élément de paroi de boîtier (26), qui est à l'opposé de la fenêtre d'observation (11) et qui présente une ouverture traversante (27) pour chaque ficelle (2), à travers laquelle la ficelle (2) respective est guidée par sa partie d'extrémité (6) dans le boîtier (5),
dans lequel de préférence au moins un élément de fixation est agencé dans la zone de l'ouverture traversante (27) respective afin de fixer la ficelle (2) respective dans l'ouverture traversante (27) respective.

10. Dispositif (1) selon la revendication 9, **caractérisé en ce que** la partie d'extrémité (6) respective de l'au moins une ficelle (2) est au moins partiellement fixée par serrage entre l'élément de paroi de boîtier (26) et la fenêtre d'observation (11), de préférence avec l'au moins un élément indicateur d'humidité (7) plan agencé entre eux.

11. Dispositif (1) selon l'une des revendications 9 à 10, **caractérisé en ce que** l'élément de paroi de boîtier (26) présente au moins une entretoise (29), de préférence sous la forme d'au moins une protubérance, afin de garantir une distance minimale entre la fenêtre d'observation (11) et un côté avant (36) de l'élément de paroi de boîtier (26).

12. Dispositif (1) selon l'une des revendications 9 à 11, **caractérisé en ce que** l'élément de paroi de boîtier (26), sur un côté (35) faisant face au sens opposé à la fenêtre d'observation (11), dans une zone de bord (30), présente un rail de précision (31) saillant, qui, lorsque le boîtier (5) est fixé à un mur (13), peut être agencé dans la zone d'un joint (14) au moins partiellement dans le joint (14).

13. Dispositif (1) selon l'une des revendications 9 à 12, **caractérisé en ce que** l'élément de paroi de boîtier (26) présente une pluralité d'ouvertures traversantes (27), dans lequel l'élément de paroi de boîtier (26) présente au moins une paroi de séparation (32) saillante, qui est agencée entre deux des ouvertures traversantes (27), dans lequel l'au moins une paroi de séparation (32) est agencée sur un côté de l'élément de paroi de boîtier (26) faisant face au sens opposé à la fenêtre d'observation (11),
dans lequel de préférence une paroi de séparation (32) est agencée dans chaque cas entre des ouvertures traversantes (27) adjacentes.

14. Agencement comprenant un dispositif (1) selon l'une des revendications 1 à 13, dans lequel l'au moins une ficelle (2) est agencée dans au moins un joint (14) et l'au moins un joint (14) est bouchée par un produit de scellement, en particulier la silicone (16),
et dans lequel le boîtier (5) est agencé au moins partiellement à l'extérieur de l'au moins un joint (14) et est scellé vers l'extérieur, dans lequel le boîtier (15) et de préférence fixé à un mur (13).

15. Utilisation du dispositif (1) selon l'une des revendications 1 à 14 pour la surveillance et la détection de l'humidité dans des cavités (21) et/ou au niveau des joints de rainure, en particulier dans le domaine des sanitaires ou dans les aquariums ou dans les piscines.
